# EUROPEAN PATENT APPLICATION

(11) **EP 2 584 305 A1**
(43) Date of publication of application: **24.04.2013**
(21) Application number: 11795438.8
(22) Date of filing: 25.02.2011
(51) Int. Cl.: G01B 9/02, G02B 5/04

(54) **OPTICAL ELEMENT AND INTERFEROMETER**

(30) Priority: 16.06.2010 JP 2010136837
(71) Applicant: Sigma Koki Co., Ltd, Saitama 350-1297 (JP); Hamamatsu Photonics K.K., Hamamatsu-shi, Shizuoka 435-8558 (JP)
(72) Inventor: INOUE, Asami, Saitama 350-1297 (JP); HIRATA, Kazuya, Saitama 350-1297 (JP); ITO, Daisuke, Saitama 350-1297 (JP); HARAGUCHI, Koshi, Saitama 350-1297 (JP); SAKAMOTO, Shigeru, Shizuoka 435-8558 (JP)
(74) Representative: Bohest AG
(86) International application number: PCT/JP2011/054285
(87) International publication number: WO 2011/158530

(57) **Abstract**

An optical element (20) is formed by bonding the faces of first to fourth triangular prisms (21, 22, 23, 24) that form the apex angle, wherein bonding faces (21a, 22b) of the first and second triangular prisms, bonding faces (22a, 23b) of the second and third triangular prisms, bonding faces (23a, 24b) of the third and fourth triangular prisms, and bonding faces (24a, 21b) of the fourth and first triangular prisms are respectively bonded through an optical thin film. Each optical thin film allows the incident light to pass through, or reflects the incident light, depending on the polarization state. The optical element (20) splits an optical path at a first position of the optical thin film, and combines optical paths at a second position of the optical thin film.

## Description

### TECHNICAL FIELD

The present invention relates to an optical element and an interferometer.

### BACKGROUND ART

A Mach-Zehnder interferometer can measure elevations and depressions or the phase shift of the measurement target by splitting light emitted from a light source into a measurement beam (object light) and a reference beam, causing interference to occur between the measurement beam that has passed through, or has been reflected by, the measurement target and the reference beam, and analyzing the interference state. A heterodyne interferometer is formed by adding an acousto-optic modulator that modulates the frequency of the measurement beam to the Mach-Zehnder interferometer, and causes interference to occur between the frequency-modulated measurement beam and the reference beam so that a beat occurs (see JP-A-2003-90704, for example).

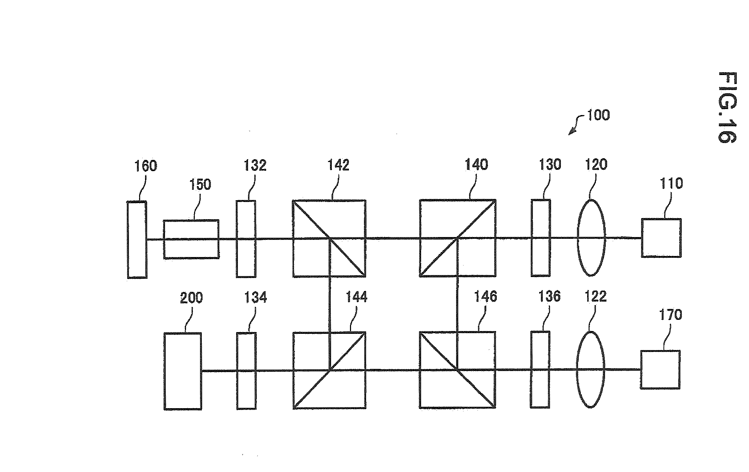

FIG. 16 illustrates an example of the configuration of the heterodyne interferometer. An interferometer 100 illustrated in FIG. 16 includes a light source 110, first and second collimating lenses 120 and 122, first to third quarter-wave plates 130, 132, and 134, a polarizer 136, first to fourth polarizing beam splitters 140, 142, 144, and 146, an acousto-optic modulator 150, a reflector 160, and a light-receiving section 170.

Light (linearly polarized light) emitted from the light source 110 is converted into circularly polarized light through the first quarter-wave plate 130, and the circularly polarized light enters the first polarizing beam splitter 140. The P-polarized component (i.e., a polarized component in the direction parallel to the incident face (plane)) of the circularly polarized light passes through the first polarizing beam splitter 140, and the S-polarized component of the circularly polarized light is reflected by the first polarizing beam splitter 140.

The light (measurement beam) (P-polarized light) that has passed through the first polarizing beam splitter 140 is converted into circularly polarized light through the second quarter-wave plate 132 after passing through the second polarizing beam splitter 142, modulated in frequency by the acousto-optic modulator 150, reflected by the reflector 160, again modulated in frequency by the acousto-optic modulator 150, converted into S-polarized light through the second quarter-wave plate 132, reflected by the second and third polarizing beam splitters 142 and 144, converted into circularly polarized light through the third quarter-wave plate 134, and applied to a measurement target 200. Reflected light from the measurement target 200 is converted into P-polarized light through the third quarter-wave plate 134, passes through the third and fourth polarizing beam splitters 144 and 146, and enters the polarizer 136.

Light (reference beam) (S-polarized light) reflected by the first polarizing beam splitter 140 is reflected by the fourth polarizing beam splitter 146, and enters the polarizer 136. The measurement beam that has passed through the fourth polarizing beam splitter and the reference beam that has been reflected by the fourth polarizing beam splitter are adjusted in polarization direction by the polarizer 136, and enter the light-receiving section 170 through the second collimating lens 122. The light-receiving section 170 outputs a beat signal that is obtained due to interference between the frequency-modulated measurement beam and the reference beam.

### SUMMARY OF THE INVENTION

### TECHNICAL PROBLEM

The interferometer illustrated in FIG. 16 has problems in that it may take time to adjust the optical axis of each optical element since an air gap for adjusting the optical path length is provided between the optical elements, and the intensity of light at the time of detection may be affected due to an optical axis shift of each optical element caused by external vibrations or the like. Moreover, since a number of reflection planes and transmission planes are present in the optical path, the intensity of light at the time of detection may decrease due to surface reflection or the like.

The invention was conceived in view of the above technical problems. An object of the invention is to provide an optical element and an interferometer that does not require an optical axis adjustment, can reduce the effects of vibrations, and can be reduced in size.

### SOLUTION TO PROBLEM

(1) According to the invention, there is provided an optical element including a plurality of optical thin films that split incident light into transmitted light and reflected light, the optical element being formed by bonding faces of n (n is an integer equal to or larger than 3) polygonal prisms respectively through the plurality of optical thin films, and the optical element splitting an optical path at a first position of one of the plurality of optical thin films, and combining the split optical paths at a second position of one of the plurality of optical thin films.

It is thus possible to reduce the size of the optical element, make it unnecessary to perform an optical axis adjustment, and reduce the effects of vibrations by integrally bonding the n polygonal prisms. Moreover, since the number of reflection planes and transmission planes can be reduced by integrally bonding the n polygonal prisms, a decrease in intensity of light at the time of detection can be suppressed.

(2) In the optical element, the plurality of optical thin films may allow the incident light to pass through, or reflect the incident light, depending on a polarization state of the incident light.

In the optical element, the plurality of optical thin films may be a dielectric multilayer film or a metal film.

The above configuration makes it possible to suppress a decrease in intensity of light at the time of detection.

(3) In the optical element, a quarter-wave plate or a half-wave plate may be bonded to at least part of at least one face of a polygonal prism among the n polygonal prisms, and the plurality of optical thin films may allow light incident thereon after passing through the quarter-wave plate or the half-wave plate to pass through, or reflect the light.

For example, when linearly polarized light is incident on the face to which the quarter-wave plate or the half-wave plate is bonded, the incident light can be converted into circularly polarized light by the quarter-wave plate or the half-wave plate, and the circularly polarized light can be split into a P-polarized component and an S-polarized component by the optical thin film.

(4) According to the invention, there is provided an interferometer including:
a light source;
an optical element that splits light emitted from the light source into a measurement beam and a reference beam, combines the measurement beam reflected by a measurement target and the reference beam, and emits the combined beam; and
a light-receiving section that receives light emitted from the optical element,
the optical element including a plurality of optical thin films that split incident light into transmitted light and reflected light, and being formed by bonding faces of n (n is an integer equal to or larger than 3) polygonal prisms respectively through the plurality of optical thin films, and
the optical element splitting the light emitted from the light source into the measurement beam and the reference beam at a first position of one of the plurality of optical thin films, and combining the measurement beam and the reference beam at a second position of one of the plurality of optical thin films.

It is thus possible to provide a Mach-Zehnder interferometer that can be reduced in size, does not require an optical axis adjustment, can reduce the effects of vibrations, and can suppress a decrease in intensity of light at the time of detection by forming the optical element by integrally bonding the n polygonal prisms.

(5) The interferometer may further include an acousto-optic modulator that modulates a frequency of the measurement beam.

It is thus possible to provide a heterodyne interferometer that can be reduced in size, does not require an optical axis adjustment, can reduce the effects of vibrations, and can suppress a decrease in intensity of light at the time of detection by forming the optical element by integrally bonding the n polygonal prisms.

### BRIEF DESCRIPTION OF DRAWINGS

FIG. 1 illustrates an example of the configuration of a Mach-Zehnder interferometer that includes an optical element according to one embodiment of the invention.
FIG. 2 illustrates an example of the configuration of a heterodyne interferometer that includes the optical element according to one embodiment of the invention.
FIG. 3 illustrates an example of the configuration of a Mach-Zehnder interferometer when a quarter-wave plate, a reflector, and a polarizer are bonded at positions differing from those of FIG. 1.
FIG. 4 illustrates an example of the configuration of a Mach-Zehnder interferometer when an optical thin film that splits incident light into transmitted light and reflected light in ratio of 1:1 is formed on each bonding face.
FIG. 5 illustrates an example of the configuration of an optical element that utilizes a triangular prism that does not have an apex angle of 90°.
FIG. 6 illustrates an example of the configuration of an optical element formed by bonding trapezoidal prisms having a trapezoidal cross-sectional shape.
FIG. 7A illustrates an example of the configuration of an optical element formed by bonding five polygonal prisms.
FIG. 7B illustrates an example of the configuration of an optical element formed by bonding five polygonal prisms.
FIG. 8A illustrates an example of the configuration of an optical element formed by bonding seven polygonal prisms.
FIG. 8B illustrates an example of the configuration of an optical element formed by bonding seven polygonal prisms.
FIG. 8C illustrates an example of the configuration of an optical element formed by bonding seven polygonal prisms.
FIG. 9A illustrates an example of the configuration of an optical element formed by bonding nine polygonal prisms.
FIG. 9B illustrates an example of the configuration of an optical element formed by bonding nine polygonal prisms.
FIG. 9C illustrates an example of the configuration of an optical element formed by bonding nine polygonal prisms.
FIG. 10A illustrates an example of the configuration of an optical element formed by bonding seven polygonal prisms.
FIG. 10B illustrates an example of the configuration of an optical element formed by bonding seven polygonal prisms.
FIG. 10C illustrates an example of the configuration of an optical element formed by bonding seven polygonal prisms.
FIG. 11A illustrates an example of the configuration of an optical element formed by bonding eight polygonal prisms.
FIG. 11B illustrates an example of the configuration of an optical element formed by bonding eight polygonal prisms.
FIG. 11C illustrates an example of the configuration of an optical element formed by bonding eight polygonal prisms.
FIG. 12A illustrates an example of the configuration of an optical element formed by bonding three polygonal prisms.
FIG. 12B illustrates an example of the configuration of an optical element formed by bonding three polygonal prisms.
FIG. 13A illustrates an example of the configuration of an optical element formed by bonding twelve polygonal prisms.
FIG. 13B illustrates an example of the configuration of an optical element formed by bonding twelve polygonal prisms.
FIG. 13C illustrates an example of the configuration of an optical element formed by bonding twelve polygonal prisms.
FIG. 14 illustrates an example of the configuration of a Mach-Zehnder interferometer when the incident angle theta of light emitted from a light source is not 90°.
FIG. 15 illustrates a configuration example when the incident angle theta of light emitted from a light source is not 90°.
FIG. 16 illustrates an example of the configuration of a conventional type interferometer.

### DESCRIPTION OF EMBODIMENTS

Exemplary embodiments of the invention are described below. Note that the following embodiments do not unduly limit the scope of the invention as stated in the claims. Note also that all of the elements described below should not necessarily be taken as essential elements of the invention.

### 1. Configuration of Mach-Zehnder interferometer

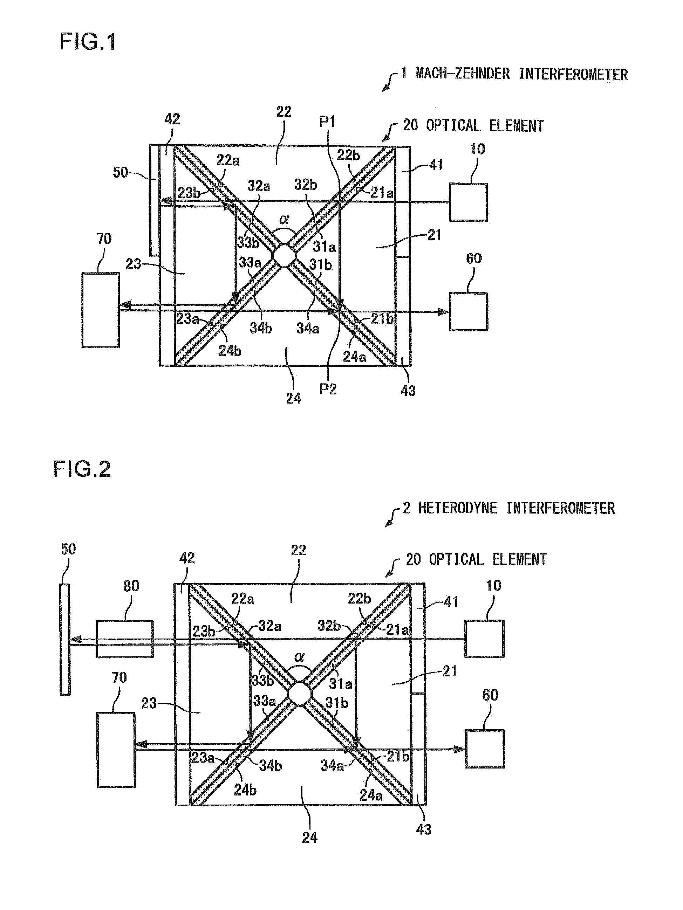

FIG. 1 illustrates an example of the configuration of a Mach-Zehnder interferometer that includes an optical element according to one embodiment of the invention.

A Mach-Zehnder interferometer 1 illustrated in FIG. 1 includes a light source 10, an optical element 20, and a light-receiving section 60 that receives light emitted from the optical element 20.

The light source 10 emits light within a specific wavelength band. The function of the light source 10 may be implemented by a laser diode, a super luminescent diode (SLD), or the like. In one embodiment of the invention, a highly coherent He-Ne laser having a long coherence length is used as the light source 10 since a measurement beam and a reference beam differ in optical path length.

The light-receiving section 60 (light detection section) receives light emitted from the optical element 20, converts the intensity of the received light into current or voltage, and outputs the current or voltage. The function of the light-receiving section 60 may be implemented by a photoelectric sensor (photodetector), a two-dimensional image sensor (e.g., CCD image sensor), or the like.

The optical element 20 splits light emitted from the light source 10 into a measurement beam and a reference beam, applies the measurement beam to a measurement target 70, combines (multiplexes) the measurement beam reflected by the measurement target 70 and the reference beam, and emits the multiplexed beam. The optical element 20 includes first to fourth triangular prisms 21 to 24 (i.e., n polygonal prisms), first and second quarter-wave plates 41 and 42, a polarizer 43, and a reflector 50 (mirror).

The first to fourth triangular prisms 21 to 24 are triangular prisms having an isosceles right triangular cross-sectional shape. The faces of the first to fourth triangular prisms 21 to 24 that form an apex angle alpha are bonded to each other to form a rectangular shape in a plan view. The apex angle area of each of the first to fourth triangular prisms 21 to 24 (i.e., the abutment area of three or more polygonal prisms) is chamfered. The degree of freedom of adjustment, and the assembly accuracy when optical-contact bonding the faces of the polygonal prisms can be improved by chamfering the abutment area of three or more polygonal prisms. Note that the optical element 20 illustrated in FIG. 1 can be configured to have a hollow center area since the optical paths of the reference beam and the measurement beam are shifted from the center position of the optical element 20.

The faces (bonding faces) of the first to fourth triangular prisms 21 to 24 that form the apex angle are coated with a dielectric multilayer film (i.e., optical thin film) that allows the incident light to pass through, or reflects the incident light, depending on the polarization state. Specifically, faces 21a and 21b of the first triangular prism 21 that form the apex angle are respectively coated with dielectric multilayer films 31a and 31b, faces 22a and 22b of the second triangular prism 22 that form the apex angle are respectively coated with dielectric multilayer films 32a and 32b, faces 23a and 23b of the third triangular prism 23 that form the apex angle are respectively coated with dielectric multilayer films 33a and 33b, and faces 24a and 24b of the fourth triangular prism 24 that form the apex angle are respectively coated with dielectric multilayer films 34a and 34b. In one embodiment of the invention, each dielectric multilayer film allows the P-polarized component of incident light to pass through, and reflects the S-polarized component of incident light. Note that it is possible to use a dielectric multilayer film that allows the S-polarized component of incident light to pass through, and reflects the P-polarized component of incident light. It is also possible to use a metal film that allows the incident light to pass through, or reflects the incident light, depending on the polarization state.

The bonding face 21 a of the first triangular prism 21 and the bonding face 22b of the second triangular prism 22 are bonded through the dielectric multilayer films 31a and 32b (corresponding to a first optical thin film), the bonding face 22a of the second triangular prism 22 and the bonding face 23b of the third triangular prism 23 are bonded through the dielectric multilayer films 32a and 33b (corresponding to a second optical thin film), the bonding face 23a of the third triangular prism 23 and the bonding face 24b of the fourth triangular prism 24 are bonded through the dielectric multilayer films 33a and 34b (corresponding to a third optical thin film), and the bonding face 24a of the fourth triangular prism 24 and the bonding face 21b of the first triangular prism 21 are bonded through the dielectric multilayer films 34a and 31b (corresponding to a fourth optical thin film). Note that the dielectric multilayer film need not necessarily be formed on the bonding face of each of the triangular prisms to be bonded, but may be formed on the bonding face of only one of the triangular prisms to be bonded.

The first quarter-wave plate 41 converts light (linearly polarized light) emitted from the light source 10 into circularly polarized light. The first quarter-wave plate 41 is bonded to the bottom of the first triangular prism 21 at a position at which the first quarter-wave plate 41 intersects the optical axis of the light source 10 (optical path).

The second quarter-wave plate 42 converts light (P-polarized light) that has passed through the dielectric multilayer film 32a formed on the bonding face of the second triangular prism 22 and the dielectric multilayer film 33b formed on the bonding face of the third triangular prism 23 into circularly polarized light, converts reflected light (circularly polarized light) from the reflector 50 into S-polarized light, converts light (S-polarized light) that has been reflected by the dielectric multilayer film 33a formed on the bonding face of the third triangular prism 23 and the dielectric multilayer film 34b formed on the bonding face of the fourth triangular prism 24 into circularly polarized light, and converts reflected light (circularly polarized light) from the measurement target 70 into P-polarized light. The second quarter-wave plate 42 is bonded to the bottom of the third triangular prism 23.

The reflector 50 reflects light that has passed through the second quarter-wave plate 42. The reflector 50 is bonded to the side of the second quarter-wave plate 42 opposite to the side bonded to the third triangular prism 23. Note that a reflective film (e.g., metal film) may be deposited on the side of the second quarter-wave plate 42 opposite to the side bonded to the third triangular prism 23 instead of bonding the reflector 50.

The polarizer 43 (analyzer) causes the polarization direction of the measurement beam (P-polarized light) that has passed through the dielectric multilayer film 34a formed on the bonding face of the fourth triangular prism 24 and the dielectric multilayer film 31b formed on the bonding face of the first triangular prism 21 to coincide with the polarization direction of the reference beam (S-polarized light) that has been reflected by the dielectric multilayer films 34a and 31b. The polarizer 43 is bonded to the bottom of the first triangular prism 21 at a position at which the polarizer 43 intersects the optical axis of the light-receiving section 60. The polarizer 43 is set so that the direction of the transmission axis forms an angle of 45° with the polarization direction of P-polarized light and S-polarized light.

The elements that form the optical element 20 are bonded via an adhesive layer (e.g., optical adhesive) (not illustrated in FIG. 1), or bonded by optical-contact bonding. An antireflective film (not illustrated in FIG. 1) is formed on the incident face (plane) of the first quarter-wave plate 41, the bonding faces of the first quarter-wave plate 41 and the first triangular prism 21, the bonding faces of the second triangular prism 23 and the second quarter-wave plate 42, the bonding faces of the second quarter-wave plate 42 and the reflector 50, the face of the second quarter-wave plate 42 on the side of the measurement target 70, the bonding faces of the first triangular prism 21 and the polarizer 43, and the exit face (plane) of the polarizer 43.

Light (P-polarized light) emitted from the light source 10 is converted into circularly polarized light through the first quarter-wave plate 41. The P-polarized component of the circularly polarized light passes through the dielectric multilayer film 31a (first optical thin film) formed on the bonding face of the first triangular prism 21 and the dielectric multilayer film 32b (first optical thin film) formed on the bonding face of the second triangular prism 22, and the S-polarized component of the circularly polarized light is reflected by the first optical thin film. Specifically, the first optical thin film has a function of splitting the light emitted from the light source 10 into the measurement beam and the reference beam (i.e., a function of splitting the optical path). The optical element 20 illustrated in FIG. 1 is thus configured so that the optical path of the incident light is split into the optical path of the measurement beam and the optical path of the reference beam at a position P1 (first position) of the first optical thin film.

The light (measurement beam) (P-polarized light) that has passed through the first optical thin film passes through the dielectric multilayer film 32a (second optical thin film) formed on the bonding face of the second triangular prism 22 and the dielectric multilayer film 33b (second optical thin film) formed on the bonding face of the third triangular prism 23, and is converted into circularly polarized light through the second quarter-wave plate 42. The circularly polarized light is reflected by the reflector 50, and converted into S-polarized light through the second quarter-wave plate 42. The S-polarized light is reflected by the second optical thin film, then reflected by the dielectric multilayer film 33a (third optical thin film) formed on the bonding face of the third triangular prism 23 and the dielectric multilayer film 34b (third optical thin film) formed on the bonding face of the fourth triangular prism 24, and converted into circularly polarized light through the second quarter-wave plate 42. The circularly polarized light is applied to the measurement target 70. Reflected light (circularly polarized light) from the measurement target 70 is converted into P-polarized light through the second quarter-wave plate 42. The P-polarized light passes through the third optical thin film, then passes through the dielectric multilayer film 34a (fourth optical thin film) formed on the bonding face of the fourth triangular prism 24 and the dielectric multilayer film 31b (fourth optical thin film) formed on the bonding face of the first triangular prism 21, and enters the polarizer 43.

Light (reference beam) (S-polarized light) reflected by the first optical thin film is reflected by the fourth optical thin film, and enters the polarizer 43. Specifically, the fourth optical thin film has a function of combining (multiplexing) the measurement beam (object light) reflected by the measurement target 70 and the reference beam (i.e., a function of combining the optical paths). The optical element 20 illustrated in FIG. 1 is thus configured so that the optical path of the measurement beam and the optical path of the reference beam are combined at a position P2 (second position) of the fourth optical thin film.

The measurement beam that has passed through the fourth optical thin film and the reference beam that has been reflected by the fourth optical thin film are converted into linearly polarized light (the polarization direction of the linearly polarized light forms an angle of 45° with the polarization direction of P-polarized light and S-polarized light) through the polarizer 43, and enters the light-receiving section 60.

The optical element 20 according to one embodiment of the invention thus independently implements a plurality of functions (i.e., a function of splitting light emitted from the light source 10 into the measurement beam and the reference beam, a function of applying the measurement beam to the measurement target 70, and a function of combining the measurement beam reflected by the measurement target 70 and the reference beam, and emitting the combined beam) required for a Mach-Zehnder interferometer. Since a plurality of optical elements (i.e., first to fourth triangular prisms 21 to 24, first and second quarter-wave plates 41 and 42, polarizer 43, and reflector 50) are integrally bonded, it is possible to implement an improvement in rigidity and a reduction in size of the optical element 20, make it unnecessary to adjust the optical axis of each optical element, and reduce the effects of vibrations. Moreover, the number of reflection planes and transmission planes can be reduced by eliminating an air gap between the optical elements, so that a decrease in light intensity at the time of detection can be minimized.

### 2. Configuration of heterodyne interferometer

FIG. 2 illustrates an example of the configuration of a heterodyne interferometer that includes the optical element according to one embodiment of the invention. The same elements as those illustrated in FIG. 1 are indicated by identical signs, and description thereof is omitted.

A heterodyne interferometer 2 illustrated in FIG. 2 includes an acousto-optic modulator (AOM) 80 that is disposed between the second quarter-wave plate 42 and the reflector 50, and modulates the frequency of light when a voltage is applied. Therefore, the optical element 20 illustrated in FIG. 2 has a configuration in which the reflector 50 is not bonded to the second quarter-wave plate 42.

Light (measurement beam) that has passed through the second optical thin film (i.e., the dielectric multilayer film 32a formed on the bonding face of the second triangular prism 22 and the dielectric multilayer film 33b formed on the bonding face of the third triangular prism 23), and has been converted into circularly polarized light through the second quarter-wave plate 42 is modulated in frequency by the acousto-optic modulator 80, reflected by the reflector 50, and again modulated in frequency by the acousto-optic modulator 80. A beat occurs when the reference beam having the frequency of the light source 10 interferes with the measurement beam modulated by the acousto-optic modulator 80, and the light-receiving section 60 outputs a beat signal that is obtained due to interference between the frequency-modulated measurement beam and the reference beam.

The optical element 20 according to one embodiment of the invention can thus be used as an optical element that forms a heterodyne interferometer obtained by incorporating an acousto-optic modulator in a Mach-Zehnder interferometer.

### 3. Modifications

The invention is not limited to the above embodiments. Various modifications and variations may be made.

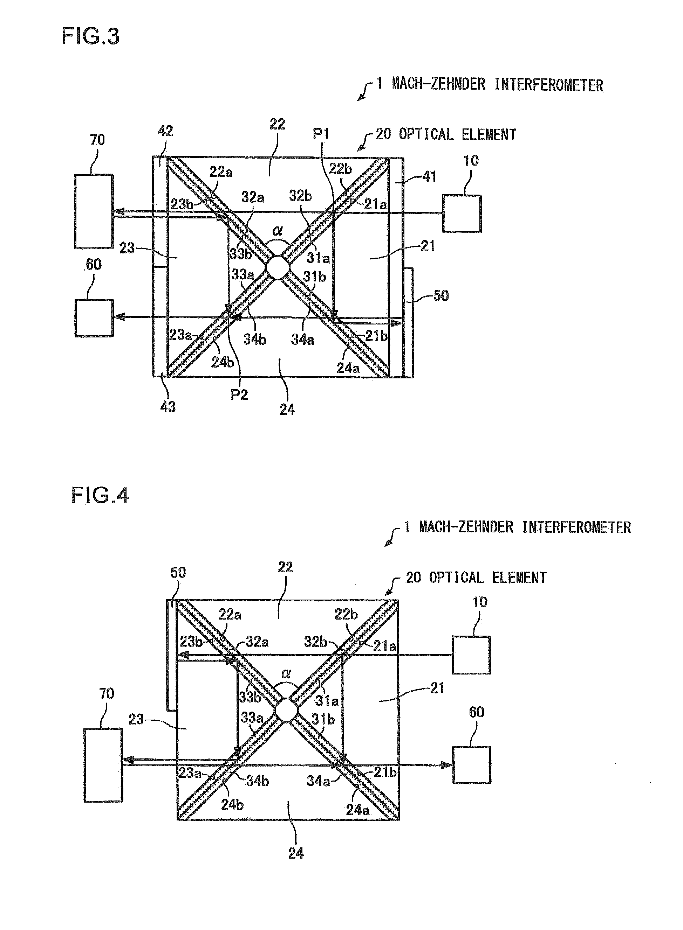

The above embodiments have been described taking an example in which the first quarter-wave plate 41 and the polarizer 43 are bonded to the bottom of the first triangular prism 21, and the second quarter-wave plate 42 is bonded to the entire bottom of the third triangular prism 23. Note that the bonding position of the quarter-wave plate and the bonding position of the polarizer are not limited thereto. It suffices that the quarter-wave plate be bonded to the bottom of the triangular prism at a position at which light emitted from the light source enters the triangular prism, and a position at which the measurement beam exits toward the measurement target, the reflector, or the acousto-optic modulator (AOM). It suffices that the polarizer be bonded to the bottom of the triangular prism at a position at which the measurement beam and the reference beam exit toward the light-receiving section. In a configuration example of the interferometer illustrated in FIG. 3, the first quarter-wave plate 41 is bonded to the entire bottom of the first triangular prism 21, and the second quarter-wave plate 42 and the polarizer 43 are bonded to the bottom of the third triangular prism 23. In the configuration example illustrated in FIG. 3, the third optical thin film (i.e., the dielectric multilayer film 33a formed on the bonding face of the third triangular prism 23 and the dielectric multilayer film 34b formed on the bonding face of the fourth triangular prism 24) has a function of combining the measurement beam (object light) reflected by the measurement target 70 and the reference beam. Specifically, the optical element 20 illustrated in FIG. 3 is configured so that the optical path of the incident light is split into the optical path of the measurement beam and the optical path of the reference beam at a position P1 (first position) of the first optical thin film, and the optical path of the measurement beam and the optical path of the reference beam are combined at a position P2 (second position) of the third optical thin film. In the configuration example illustrated in FIG. 3, the optical path difference between the measurement beam and the reference beam is reduced as compared with FIG. 1.

The above embodiments have been described taking an example in which light emitted from the light source 10 is converted into circularly polarized light through the first quarter-wave plate 41. Note that light emitted from the light source 10 may be converted into linearly polarized light, of which the polarization direction forms an angle of 45° with the polarization direction of P-polarized light and S-polarized light, through a half-wave plate. In this case, a half-wave plate that is set so that the principal axis direction forms an angle of 45/2° with the polarization direction of P-polarized light may be bonded to the bottom of the triangular prism at a position at which light emitted from the light source enters the triangular prism.

The above embodiments have been described taking an example in which the optical thin film that allows the incident light to pass through, or reflects the incident light, depending on the polarization state is formed on the faces (bonding faces) of the first to fourth triangular prisms that form the apex angle. Note that an optical thin film that splits incident light into transmitted light and reflected light in ratio of 1:1 (i.e., functions as a half mirror) may be formed on each bonding face. In this case, the quarter-wave plate and the polarizer are bonded to the bottom of the first triangular prism 21 and the third triangular prism 23, and the reflector 50 is bonded to part of the bottom of the third triangular prism 23 (see FIG. 4). When employing the configuration illustrated in FIG. 4, it is preferable to sufficiently increase the intensity of incident light since the intensity of the measurement beam at the time of detection decreases to a value that is 1/64th of the incident light from the light source 10.

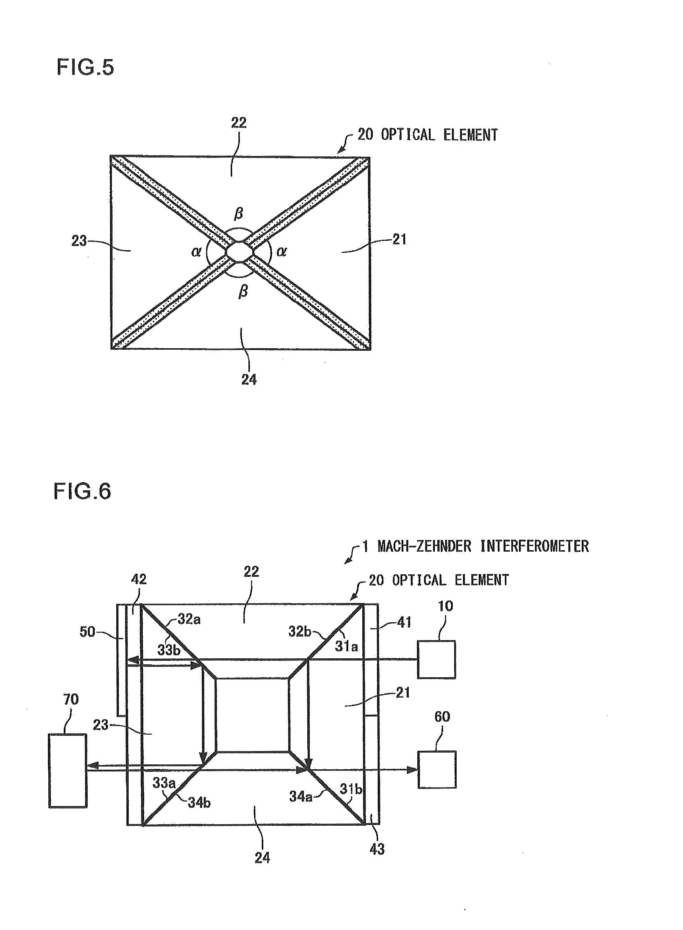

The above embodiments have been described taking an example in which a triangular prism having an isosceles right triangular cross-sectional shape (apex angle: 90°) is used as the first to fourth triangular prisms that form the optical element 20. Note that the optical element may be formed using a triangular prism that does not have an apex angle of 90°. As illustrated in FIG. 5, the first and third triangular prisms 21 and 23 having an apex angle alpha and the second and fourth triangular prisms 22 and 24 having an apex angle beta (beta>alpha) may be bonded to form the optical element 20 so that the total apex angle (alpha+beta) of the adjacent triangular prisms is 180°, for example.

The above embodiments have been described taking an example in which the optical element is formed by bonding the first to fourth triangular prisms. Note that n polygonal prisms having a cross-sectional shape other than a triangular cross-sectional shape may be bonded.

As illustrated in FIG. 6, a trapezoidal prism having a trapezoidal cross-sectional shape may be used as the first to fourth polygonal prisms 21 to 24, for example. In the optical element 20 illustrated in FIG. 6, the faces of the first to fourth trapezoidal prisms 21 to 24 are bonded to have a rectangular external shape in a plan view. The bonding faces of the first and second trapezoidal prisms 21 and 22 are bonded through the optical thin film 31a and 32b, the bonding faces of the second and third trapezoidal prisms 22 and 23 are bonded through the optical thin films 32a and 33b, the bonding faces of the third and fourth trapezoidal prisms 23 and 24 are bonded through the optical thin films 33a and 34b, and the bonding faces of the fourth and first trapezoidal prisms 24 and 21 are bonded through the optical thin film 34a and 31b.

As described above, the optical element one embodiment of the invention may be formed by bonding n (n is an integer equal to or larger than 3) polygonal prisms.

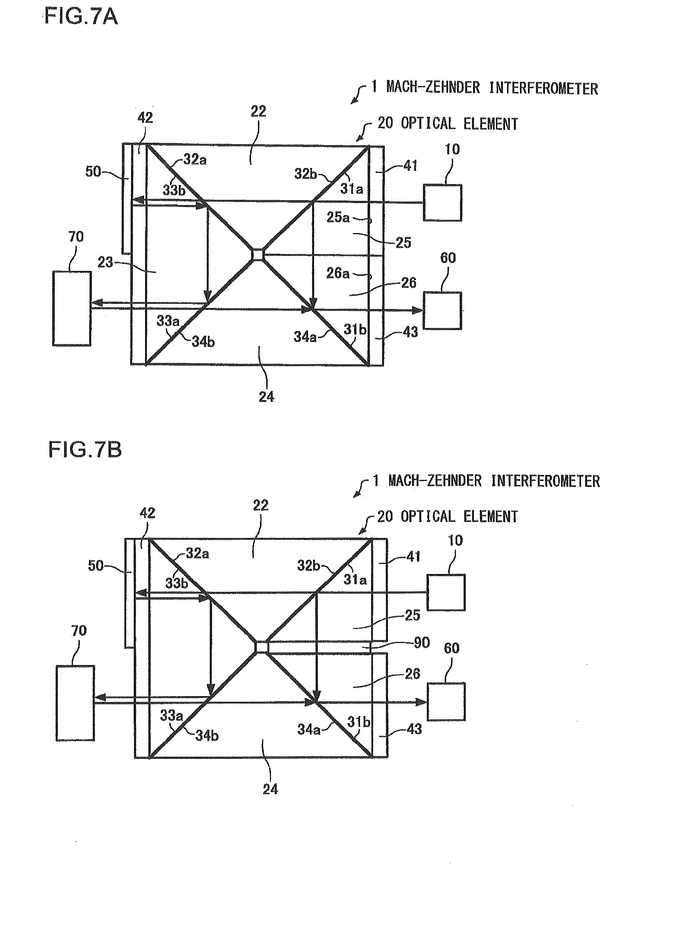

FIG. 7A illustrates an example of the configuration of an optical element formed by bonding five polygonal prisms. The optical element 20 illustrated in FIG. 7A has a configuration in which the triangular prism 21 of the optical element 20 illustrated in FIG. 1 is divided into two triangular prisms 25 and 26. The formation position of each optical thin film and the optical paths of the reference beam and the measurement beam are the same as those of the optical element 20 illustrated in FIG. 1. In the optical element 20 illustrated in FIG. 7A, the first quarter-wave plate 41 is bonded to the entire face 25a of the triangular prism 25, and the polarizer 43 is bonded to the entire face 26a of the triangular prism 26. The optical element 20 illustrated in FIG. 7A has an advantage in that assembly of the optical element is facilitated as compared with the optical element 20 illustrated in FIG. 1 in which the first quarter-wave plate 41 and the polarizer 43 are bonded to the bottom of the first triangular prism 21. Note that the third triangular prism 23 of the optical element 20 illustrated in FIG. 1 may also be divided into two triangular prisms in the same manner as in FIG. 7A (i.e., the optical element may be formed by bonding six polygonal prisms in total).

As illustrated in FIG. 7B, a neutral density filter (ND filter) 90 may be provided at a position at which the triangular prisms 25 and 26 face each other. The optical elements 20 illustrated in FIGS. 1 and 7A have a configuration in which the intensity of the measurement beam received by the light-receiving section 60 is lower than the intensity of the reference beam since the optical path length of the measurement beam is longer than that of the reference beam. The intensity of the measurement beam received by the light-receiving section 60 can be made equal to the intensity of the reference beam by providing the ND filter 90 in the optical path of the reference beam as illustrated in FIG. 7B to reduce the intensity of the reference beam.

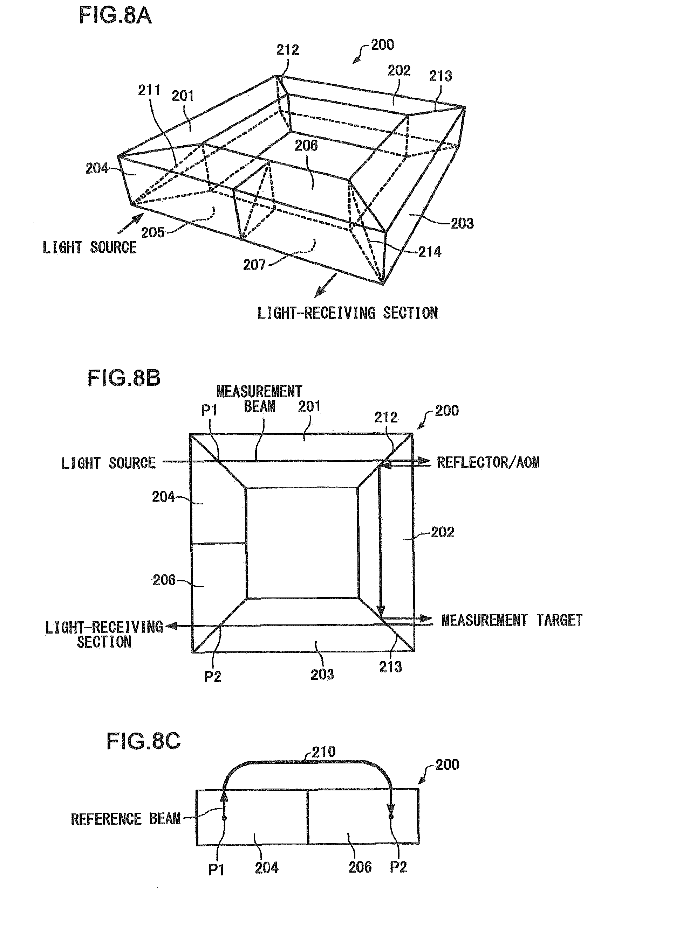

FIG. 8A is a perspective view illustrating an optical element 200 formed by bonding seven polygonal prisms, FIG. 8B is a plan view (top view) illustrating the optical element 200, and FIG. 8C is a side view illustrating the optical element 200. The optical element 200 illustrated in FIGS. 8A to 8C is formed by bonding the faces of first to seventh prisms 201 to 207. The bonding faces of the fourth and fifth prisms 204 and 205, the bonding faces of the first and second prisms 201 and 202, the bonding faces of the second and third prisms 202 and 203, and the bonding faces of the sixth and seventh prisms 206 and 207 are bonded through first to fourth optical thin films 211 to 214, respectively. As illustrated in FIG. 8B, part (i.e., measurement beam) of the light emitted from the light source passes through the first and second optical thin films 211 and 212, and is reflected by the reflector (or reflected by the reflector after being modulated by the AOM). The reflected light is reflected by the second and third optical thin films 212 and 213, and applied to the measurement target. Reflected light from the measurement target passes through the third and fourth optical thin films 213 and 214, and enters the light-receiving section. As illustrated in FIG. 8C, part (i.e., reference beam) of the light emitted from the light source is reflected by the first optical thin film 211, enters one end of an optical fiber 210, exits from the other end of the optical fiber 210, is reflected by the fourth optical thin film 214, and enters the light-receiving section. Specifically, the optical element 200 illustrated in FIGS. 8A to 8C is configured so that the first optical thin film 211 has a function of splitting light emitted from the light source into the measurement beam and the reference beam, and the fourth optical thin film 214 has a function of combining the measurement beam reflected by the measurement target and the reference beam. In other words, the optical element 200 illustrated in FIGS. 8A to 8C is configured so that the optical path of the incident light is split into the optical path of the measurement beam and the optical path of the reference beam at a position P1 (first position) of the first optical thin film 211, and the optical path of the measurement beam and the optical path of the reference beam are combined at a position P2 (second position) of the fourth optical thin film 214. The optical element 200 illustrated in FIGS. 8A to 8C has an advantage in that the optical path length of the reference beam can be adjusted so that the optical path length of the measurement beam is equal to that of the reference beam, which can be done by adjusting the length of the optical fiber 210.

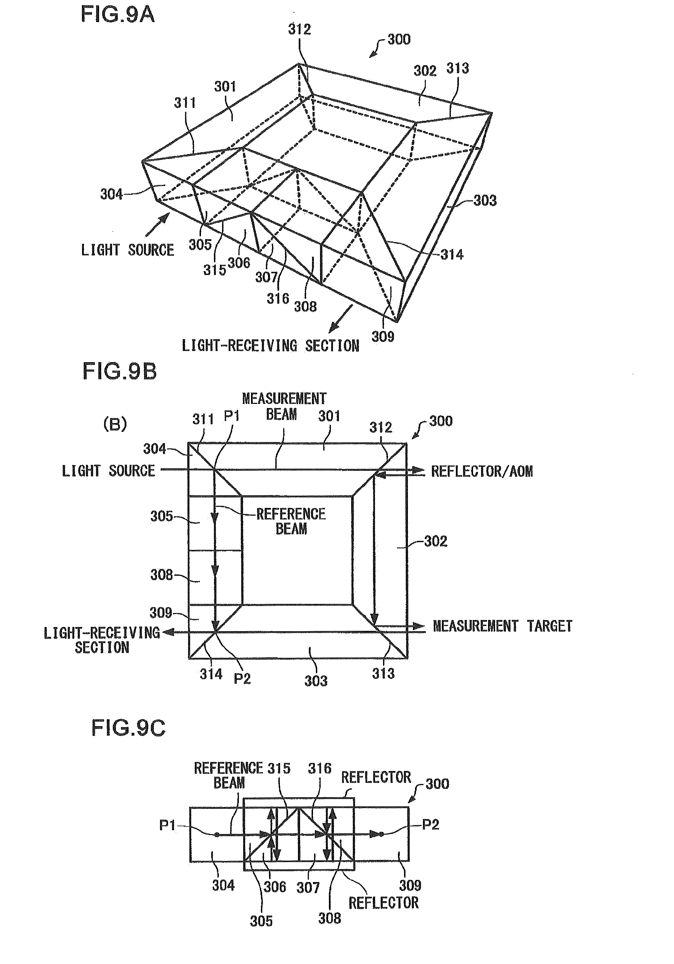

FIG. 9A is a perspective view illustrating an optical element 300 formed by bonding nine polygonal prisms, FIG. 9B is a plan view (top view) illustrating the optical element 300, and FIG. 9C is a side view illustrating the optical element 300. The optical element 300 illustrated in FIGS. 9A to 9C is formed by bonding the faces of first to ninth prisms 301 to 309. The bonding faces of the fourth and first prisms 304 and 301, the bonding faces of the first and second prisms 301 and 302, the bonding faces of the second and third prisms 302 and 303, the bonding faces of the third and ninth prisms 303 and 309, the bonding faces of the fifth and sixth prisms 305 and 306, and the bonding faces of the seventh and eighth prisms 307 and 308 are bonded through first to sixth optical thin films 311 to 316, respectively. As illustrated in FIG. 9B, part (i.e., measurement beam) of the light emitted from the light source passes through the first and second optical thin films 311 and 312, and is reflected by the reflector (or reflected by the reflector after being modulated by the AOM). The reflected light is reflected by the second and third optical thin films 312 and 313, and applied to the measurement target. Reflected light from the measurement target passes through the third and fourth optical thin films 313 and 314, and enters the light-receiving section. As illustrated in FIG. 9C, part (i.e., reference beam) of the light emitted from the light source is reflected by the first and fifth optical thin films 311 and 315, is reflected by the upper reflector (reflective film), passes through the fifth optical thin film 315, is reflected by the lower reflector, is reflected by the fifth and sixth optical thin films 315 and 316, is reflected by the lower reflector, passes through the sixth optical thin film 316, is reflected by the upper reflector, is reflected by the sixth and fourth optical thin films 316 and 314, and enters the light-receiving section. Specifically, the optical element 300 illustrated in FIGS. 9A to 9C is configured so that the first optical thin film 311 has a function of splitting light emitted from the light source into the measurement beam and the reference beam, and the fourth optical thin film 314 has a function of combining the measurement beam reflected by the measurement target and the reference beam. In other words, the optical element 300 illustrated in FIGS. 9A to 9C is configured so that the optical path of the incident light is split into the optical path of the measurement beam and the optical path of the reference beam at a position P1 (first position) of the first optical thin film 311, and the optical path of the measurement beam and the optical path of the reference beam are combined at a position P2 (second position) of the fourth optical thin film 314.

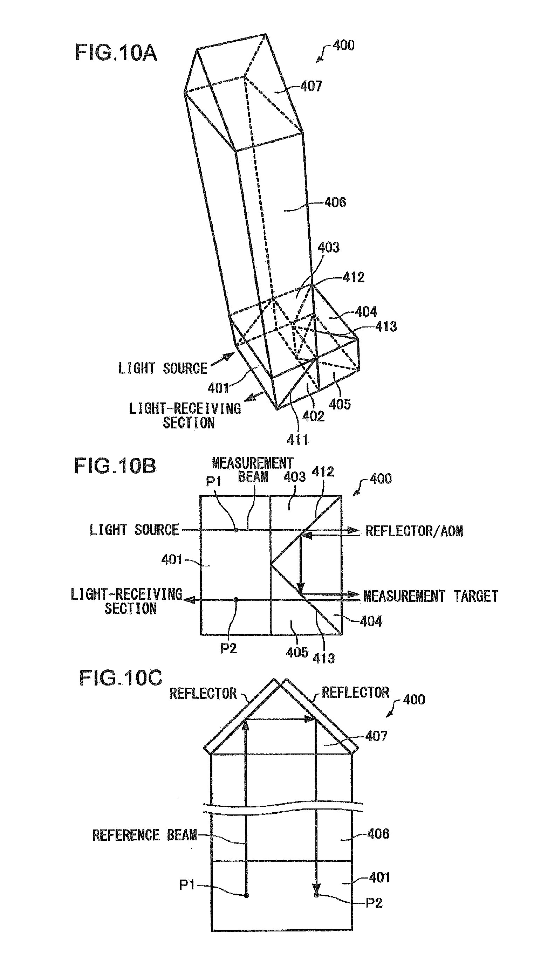

FIG. 10A is a perspective view illustrating an optical element 400 formed by bonding seven polygonal prisms, FIG. 10B is a plan view (top view) illustrating the optical element 400 (sixth and seventh prisms 406 and 407 are omitted), and FIG. 10C is a side view illustrating the optical element 400. The optical element 400 illustrated in FIGS. 10A to 10C is formed by bonding the faces of first to seventh prisms 401 to 407.
The bonding faces of the first and second prisms 401 and 402, the bonding faces of the third and fourth prisms 403 and 404, and the bonding faces of the fourth and fifth prisms 404 and 405 are bonded through first to third optical thin films 411 to 413, respectively. As illustrated in FIG. 10B, part (i.e., measurement beam) of the light emitted from the light source passes through the first and second optical thin films 411 and 412, and is reflected by the reflector (or reflected by the reflector after being modulated by the AOM). The reflected light is reflected by the second and third optical thin films 412 and 413, and applied to the measurement target. Reflected light from the measurement target passes through the third and first optical thin films 413 and 411, and enters the light-receiving section. As illustrated in FIG. 10C, part (i.e., reference beam) of the light emitted from the light source is reflected by the first optical thin film 411, and reflected by two reflectors (reflective films). The reflected light is reflected by the first optical thin film 411, and enters the light-receiving section. Specifically, the optical element 400 illustrated in FIGS. 10A to 10C is configured so that the first optical thin film 411 has a function of splitting light emitted from the light source into the measurement beam and the reference beam, and a function of combining the measurement beam reflected by the measurement target and the reference beam. In other words, the optical element 400 illustrated in FIGS. 10A to 10C is configured so that the optical path of the incident light is split into the optical path of the measurement beam and the optical path of the reference beam at a position P1 (first position) of the first optical thin film 411, and the optical path of the measurement beam and the optical path of the reference beam are combined at a position P2 (second position) of the first optical thin film 411. The optical element 400 illustrated in FIGS. 10A to 10C has an advantage in that the optical path length of the reference beam can be adjusted so that the optical path length of the measurement beam is equal to that of the reference beam, which can be done by adjusting the length (length along the optical path of the reference beam) of the sixth prism 406.

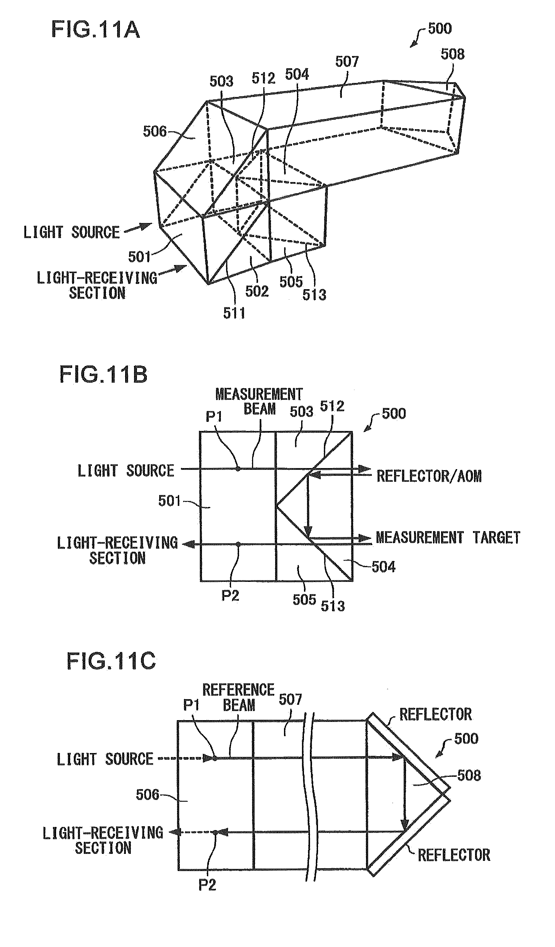

FIG. 11A is a perspective view illustrating an optical element 500 formed by bonding eight polygonal prisms, FIG. 11B is a plan view (top view) illustrating the optical element 500 (sixth to eighth prisms 506 to 508 are omitted), and FIG. 11C is a side view illustrating the optical element 500. The optical element 500 illustrated in FIGS. 11A to 11C is formed by bonding the faces of first to eighth prisms 501 to 508. The bonding faces of the first and second prism 501 and 502, the bonding faces of the third and fourth prisms 503 and 504, and the bonding faces of the fourth and fifth prisms 504 and 505 are bonded through first to third optical thin films 511 to 513, respectively. As illustrated in FIG. 11B, part (i.e., measurement beam) of the light emitted from the light source passes through the first and second optical thin films 511 and 512, and is reflected by the reflector (or reflected by the reflector after being modulated by the AOM). The reflected light is reflected by the second and third optical thin films 512 and 513, and applied to the measurement target. Reflected light from the measurement target passes through the third and first optical thin films 513 and 511, and enters the light-receiving section. As illustrated in FIG. 11C, part (i.e., reference beam) of the light emitted from the light source is reflected by the first optical thin film 511, and reflected by reflectors (reflective films) provided at the bottom of the sixth prism 506 and the bottom of the eighth prism 508. The reflected light is reflected by the first optical thin film 511, and enters the light-receiving section. Specifically, the optical element 500 illustrated in FIGS. 11A to 11C is configured so that the first optical thin film 511 has a function of splitting light emitted from the light source into the measurement beam and the reference beam, and a function of combining the measurement beam reflected by the measurement target and the reference beam. In other words, the optical element 500 illustrated in FIGS. 11A to 11C is configured so that the optical path of the incident light is split into the optical path of the measurement beam and the optical path of the reference beam at a position P1 (first position) of the first optical thin film 511, and the optical path of the measurement beam and the optical path of the reference beam are combined at a position P2 (second position) of the first optical thin film 511. The optical element 500 illustrated in FIGS. 11A to 11C has an advantage in that the optical path length of the reference beam can be adjusted so that the optical path length of the measurement beam is equal to that of the reference beam, which can be done by adjusting the length (length along the optical path of the reference beam) of the seventh prism 507.

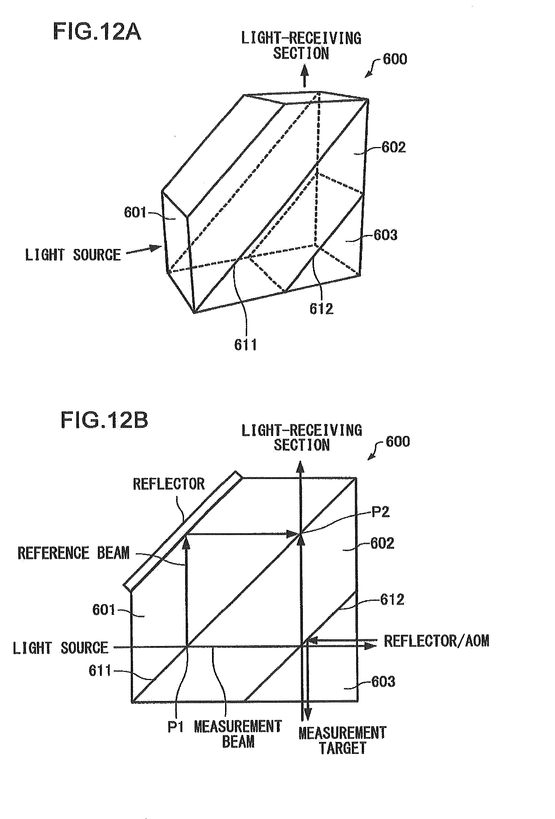

FIG. 12A is a perspective view illustrating an optical element 600 formed by bonding three polygonal prisms, and FIG. 12B is a plan view illustrating the optical element 600. The optical element 600 illustrated in FIGS. 12A and 12B is formed by bonding the faces of first and second prisms 601 and 602 having a trapezoidal cross-sectional shape and a third prism 603 having an isosceles right triangular cross-sectional shape. The bonding faces of the first and second prisms 601 and 602, and the bonding faces of the second and third prisms 602 and 603 are bonded through first and second optical thin films 611 and 612, respectively. As illustrated in FIG. 12B, part (i.e., measurement beam) of the light emitted from the light source passes through the first and second optical thin films 611 and 612, and is reflected by the reflector (or reflected by the reflector after being modulated by the AOM). The reflected light is reflected by the second optical thin film 612, and applied to the measurement target. Reflected light from the measurement target passes through the second and first optical thin films 612 and 611, and enters the light-receiving section. Part (i.e., reference beam) of the light emitted from the light source is reflected by the first optical thin film 611, and reflected by the reflector. The reflected light is reflected by the first optical thin film 611, and enters the light-receiving section. Specifically, the optical element 600 illustrated in FIGS. 12A and 12B is configured so that the first optical thin film 611 has a function of splitting light emitted from the light source into the measurement beam and the reference beam, and a function of combining the measurement beam reflected by the measurement target and the reference beam. In other words, the optical element 600 illustrated in FIGS. 12A and 12B is configured so that the optical path of the incident light is split into the optical path of the measurement beam and the optical path of the reference beam at a position P1 (first position) of the first optical thin film 611, and the optical path of the measurement beam and the optical path of the reference beam are combined at a position P2 (second position) of the first optical thin film 611.

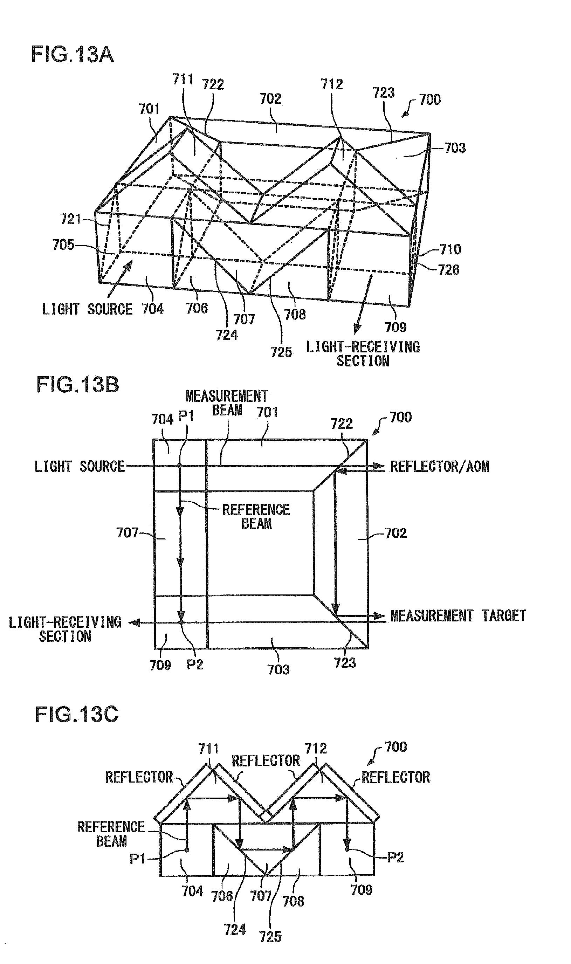

FIG. 13A is a perspective view illustrating an optical element 700 formed by bonding twelve polygonal prisms, FIG. 13B is a plan view (top view) illustrating the optical element 700 (eleventh and twelfth prisms 711 and 712 are omitted), and FIG. 13C is a side view illustrating the optical element 700. The optical element 700 illustrated in FIGS. 13A to 13C is formed by bonding the faces of first to twelfth prisms 701 to 712. The bonding faces of the fourth and fifth prisms 704 and 705, the bonding faces of the first and second prisms 701 and 702, the bonding faces of the second and third prisms 702 and 703, the bonding faces of the sixth and seventh prisms 706 and 707, the bonding faces of the seventh and eighth prisms 707 and 708, and the bonding faces of the ninth and tenth prisms 709 and 710 are bonded through first to sixth optical thin films 721 to 726, respectively. As illustrated in FIG. 13B, part (i.e., measurement beam) of the light emitted from the light source passes through the first and second optical thin films 721 and 722, and is reflected by the reflector (or reflected by the reflector after being modulated by the AOM). The reflected light is reflected by the second and third optical thin films 722 and 723, and applied to the measurement target. Reflected light from the measurement target passes through the third and sixth optical thin films 723 and 726, and enters the light-receiving section. As illustrated in FIG. 13C, part (i.e., reference beam) of the light emitted from the light source is reflected by the first optical thin film 721, and reflected by the reflector (reflective film). The reflected light is sequentially reflected by the fourth and fifth optical thin films 724 and 726, the reflector, and the sixth optical thin film 726, and enters the light-receiving section. Specifically, the optical element 700 illustrated in FIGS. 13A to 13C is configured so that the first optical thin film 721 has a function of splitting light emitted from the light source into the measurement beam and the reference beam, and the sixth optical thin film 726 has a function of combining the measurement beam reflected by the measurement target and the reference beam. In other words, the optical element 700 illustrated in FIGS. 13A to 13C is configured so that the optical path of the incident light is split into the optical path of the measurement beam and the optical path of the reference beam at a position P1 (first position) of the first optical thin film 721, and the optical path of the measurement beam and the optical path of the reference beam are combined at a position P2 (second position) of the sixth optical thin film 726.

When forming the optical elements illustrated in FIGS. 8A to 13C using an optical thin film that allows the incident light to pass through, or reflects the incident light, depending on the polarization state, a quarter-wave plate or a half-wave plate (that is set so that the principal axis direction forms an angle of 45/2° with the polarization direction of P-polarized light) may be bonded at a position at which light emitted from the light source enters, a quarter-wave plate may be bonded at a position at which the measurement beam or the reference beam exits toward the measurement target, the reflector, or the acousto-optic modulator (AOM), and a polarizer may be bonded at a position at which the measurement beam and the reference beam exit toward the light-receiving section.

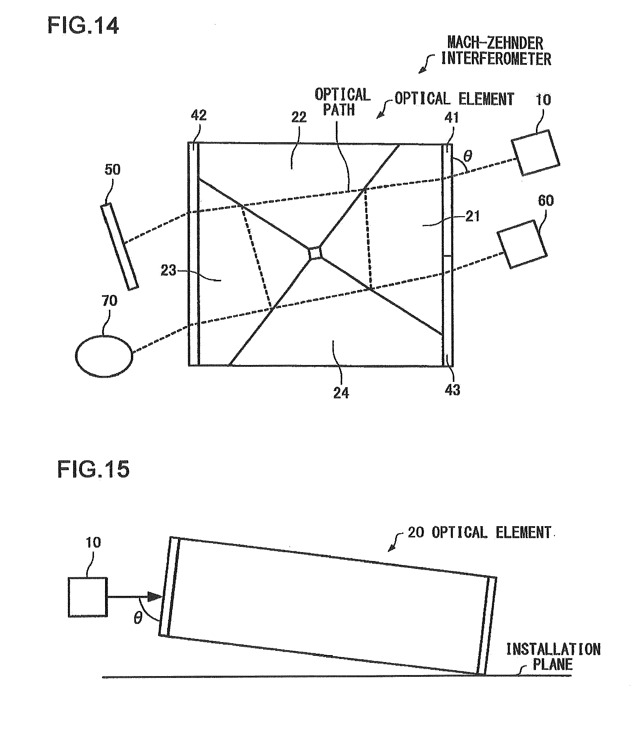

The above embodiments have been described taking an example in which light emitted from the light source enters the incident face (plane) of the optical element perpendicularly. Note that the incident angle theta of light emitted from the light source 10 may not be 90° in a plan view (see FIG. 14). This makes it possible to prevent occurrence of a ghost due to surface reflection. In the example illustrated in FIG. 14, the reflector 50 is not bonded to the second quarter-wave plate 42, but is disposed at a distance from the second quarter-wave plate 42 so that the reflector 50 is tilted with respect to the second quarter-wave plate 42 such that the measurement beam that has passed through the second quarter-wave plate 42 is incident on the reflector 50 perpendicularly. As illustrated in FIG. 15, the optical element 20 may disposed so that the optical element 20 is tilted with respect to the installation plane such that the incident angle theta of light emitted from the light source 10 is a value other than 90° in a side view. This makes it possible to prevent occurrence of a ghost due to surface reflection without changing the shape of each prism that forms the optical element 20.

### REFERENCE SIGNS LIST

1: Mach-Zehnder interferometer, 2: heterodyne interferometer, 10: light source, 20: optical element, 21: first triangular prism, 22: second triangular prism, 23: third triangular prism, 24: fourth triangular prism, 41: first quarter-wave plate, 42: second quarter-wave plate, 43: polarizer, 50: reflector, 60: light-receiving section, 70: measurement target, 80: acousto-optic modulator

## Claims

1. An optical element comprising a plurality of optical thin films that split incident light into transmitted light and reflected light,
the optical element being formed by bonding faces of n (n is an integer equal to or larger than 3) polygonal prisms respectively through the plurality of optical thin films, and
the optical element splitting an optical path at a first position of one of the plurality of optical thin films, and combining the split optical paths at a second position of one of the plurality of optical thin films.

2. The optical element according to claim 1, wherein the plurality of optical thin films allow the incident light to pass through, or reflect the incident light, depending on a polarization state of the incident light.

3. The optical element according to claim 2,
wherein a quarter-wave plate or a half-wave plate is bonded to at least part of at least one face of a polygonal prism among the n polygonal prisms, and
wherein the plurality of optical thin films allow light incident on the plurality of optical thin films after passing through the quarter-wave plate or the half-wave plate to pass through, or reflect the light.

4. An interferometer comprising:
a light source;
an optical element that splits light emitted from the light source into a measurement beam and a reference beam, combines the measurement beam reflected by a measurement target and the reference beam, and emits the combined beam; and
a light-receiving section that receives light emitted from the optical element,
the optical element including a plurality of optical thin films that split incident light into transmitted light and reflected light, and being formed by bonding faces of n (n is an integer equal to or larger than 3) polygonal prisms respectively through the plurality of optical thin films, and
the optical element splitting the light emitted from the light source into the measurement beam and the reference beam at a first position of one of the plurality of optical thin films, and combining the measurement beam and the reference beam at a second position of one of the plurality of optical thin films.

5. The interferometer according to claim 4, further comprising an acousto-optic modulator that modulates a frequency of the measurement beam.
